(19) Europäisches Patentamt
European Patent Office
Office européen des brevets

(11) **EP 3 591 974 A1**

(12) **EUROPEAN PATENT APPLICATION**

(43) Date of publication:
**08.01.2020 Bulletin 2020/02**

(21) Application number: **18305852.8**

(22) Date of filing: **02.07.2018**

(51) Int Cl.:
**H04N 19/577** (2014.01)     **H04N 19/176** (2014.01)
**H04N 19/513** (2014.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital VC Holdings, Inc.**
**Wilmington, DE 19809 (US)**

(72) Inventors:
• **ROBERT, Antoine**
**35576 Cesson-Sévigné (FR)**
• **LELEANNEC, Fabrice**
**35576 Cesson-Sévigné (FR)**
• **GALPIN, Franck**
**35576 Cesson-Sévigné (FR)**

(74) Representative: **Huchet, Anne et al**
**InterDigital CE Patent Holdings**
**20, rue Rouget de Lisle**
**92130 Issy-les-Moulineaux (FR)**

(54) **DATA DEPENDENCY IN ENCODING/DECODING**

(57)     A video encoder or decoder processes portions of video with less delay when its processes are parallelized and avoids delays caused by dependence on the completion of prior processes. In one embodiment, a motion vector predictor from a neighboring block of video is used in a subsequent later block of video before it is finished being refined for use in the neighboring block. In another embodiment, information from a neighboring block is confined to include blocks in the same coding tree unit. In another embodiment, a motion vector predictor is checked to see whether it is already in a list of candidates before adding it to the list to expedite the process.

Figure 11

**Description**

FIELD OF THE INVENTION

The present aspects relate to video compression and video encoding and decoding.

BACKGROUND OF THE INVENTION

In the HEVC (High Efficiency Video Coding, ISO/IEC 23008-2, ITU-T H.265) video compression standard, motion compensated temporal prediction is employed to exploit the redundancy that exists between successive pictures of a video.

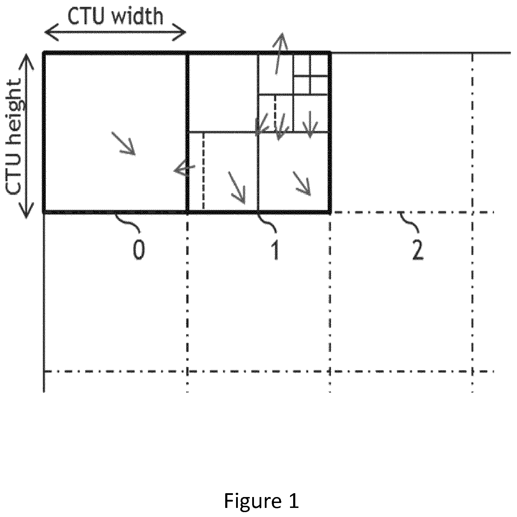

To do so, a motion vector is associated to each prediction unit (PU). Each CTU is represented by a Coding Tree in the compressed domain. This is a quad-tree division of the CTU, where each leaf is called a Coding Unit (CU), as shown in Figure 1.

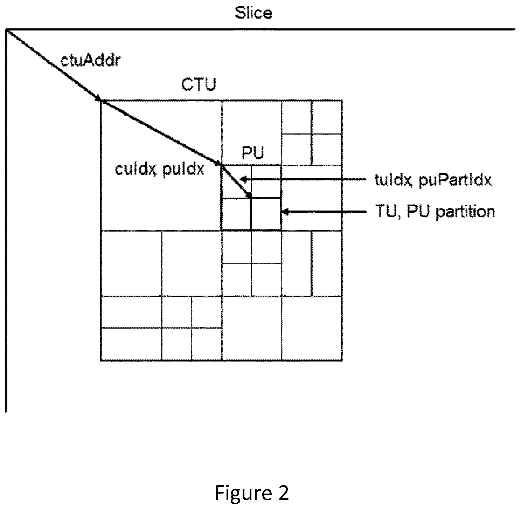

Each CU is then given some Intra or Inter prediction parameters (Prediction Info). To do so, it is spatially partitioned into one or more Prediction Units (PUs), each PU being assigned some prediction information. The Intra or Inter coding mode is assigned on the CU level, as shown in Figure 2.

A Motion Vector is assigned to each PU in HEVC. This motion vector is used for motion compensated temporal prediction of the considered PU. Therefore, in HEVC, the motion model that links a predicted block and its reference block includes a translation.

In the Joint Exploration Model (JEM) developed by the JVET (Joint Video Exploration Team) group, some motion models are supported to improve temporal prediction. To do so, a PU can be spatially divided into sub-PU and a model can be used to assign each sub-PU a dedicated motion vector.

In other versions of the JEM, a CU is no longer divided into PUs or Tus (Transform Units), and some motion data is directly assigned to each CU. In this new codec design, a CU can be divided into sub-CU and a motion vector can be computed for each sub-CU.

For inter frame motion compensation, a set of new tools which use decoder side parameter estimation was developed in JEM, including, for example, FRUC merge, FRUC bilateral, and IC.

SUMMARY OF THE INVENTION

Drawbacks and disadvantages of the prior art may be addressed by one or more of the embodiments described herein, including embodiments for reducing data dependency in encoding and decoding.

According to a first aspect, there is provided a method. The method comprises steps for obtaining information for a current video block from a neighboring video block before the information is refined for use in the neighboring video block; refining the information for use with the current video block; and, encoding the current video block using the refined information.

According to another aspect, there is provided a second method. The method comprises steps for obtaining information for a current video block from a reconstructed neighboring video block before the information is refined for use in the neighboring video block; refining the information for use with the current video block; and, decoding the current video block using the refined information.

According to another aspect, there is provided an apparatus. The apparatus comprises a memory and a processor. The processor can be configured to encode a block of a video or decode a bitstream by executing the either of the aforementioned methods.

According to another general aspect of at least one embodiment, there is provided a device comprising an apparatus according to any of the decoding embodiments; and at least one of (i) an antenna configured to receive a signal over the air, the signal including the video block, (ii) a band limiter configured to limit the received signal to a band of frequencies that includes the video block, or (iii) a display configured to display an output.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

## BRIEF DESCRIPTION OF THE DRAWINGS

Figure 1 shows Coding Tree Unit and Coding Tree concepts to represent a compressed HEVC picture.

Figure 2 shows division of a Coding Tree Unit into Coding Units, Prediction Units and Transform Units.

Figure 3 shows an example of bilateral matching cost function.

Figure 4 shows an example of template matching cost function.

Figure 5 shows the L-shapes in references 0 or 1 is compared to the current block L-shape to derive the IC parameters.

Figure 6 shows an example of processing pipeline with data flow dependencies.

Figure 7 shows an example of pipeline with data dependency arising in the motion compensation module.

Figure 8 shows a generic encoding embodiment to which the present embodiments can be applied.

Figure 9 shows a generic decoding embodiment to which the present embodiments can be applied.

Figure 10 shows an overview of a default FRUC process of motion vector derivation.

Figure 11 shows an overview of an embodiment of a modified FRUC process of motion vector derivation.

Figure 12 is an Example of CU using the FRUC template mode.

Figure 13 shows an Example of motion vector predictor derivation for merge candidates in JEM.

Figure 14 shows an example From left to right: default check, alternative check, simplified check under the exemplary embodiments.

Figure 15 shows a block diagram of an exemplary communications channel in which various aspects and exemplary embodiments are implemented.

Figure 16 shows one embodiment of a method for encoding under the general described aspects.

Figure 17 shows one embodiment of a method for decoding under the general described aspects.

Figure 18 shows one embodiment of an apparatus for encoding or decoding under the general described aspects.

## DETAILED DESCRIPTION

The described embodiments are generally in the field of video compression. One or more embodiments aim at improving compression efficiency compared to existing video compression systems.

In the HEVC (High Efficiency Video Coding, ISO/IEC 23008-2, ITU-T H.265) video compression standard, motion compensated temporal prediction is employed to exploit the redundancy that exists between successive pictures of a video.

To do so, a motion vector is associated to each prediction unit (PU). Each CTU is represented by a Coding Tree in the compressed domain. This is a quad-tree division of the CTU, where each leaf is called a Coding Unit (CU), as shown in Figure 1.

Each CU is then given some Intra or Inter prediction parameters (Prediction Info). To do so, it is spatially partitioned into one or more Prediction Units (PUs), each PU being assigned some prediction information. The Intra or Inter coding mode is assigned on the CU level, as shown in Figure 2.

A Motion Vector is assigned to each PU in HEVC. This motion vector is used for motion compensated temporal prediction of the considered PU. Therefore, in HEVC, the motion model that links a predicted block and its reference block includes a translation.

In the Joint Exploration Model (JEM) developed by the JVET (Joint Video Exploration Team) group, some motion models are supported to improve temporal prediction. To do so, a PU can be spatially divided into sub-PU and a model can be used to assign each sub-PU a dedicated motion vector.

In other versions of the JEM, a CU is no longer divided into PUs or Tus (Transform Units), and some motion data is directly assigned to each CU. In this new codec design, a CU can be divided into sub-CU and a motion vector can be computed for each sub-CU.

For inter frame motion compensation, a set of new tools which use decoder side parameter estimation was developed in JEM, including, for example, FRUC merge, FRUC bilateral, and IC.

The FRUC (Frame Rate Up Conversion) tool is described as follows.

FRUC allows deriving motion information of a CU at decoder side without signaling.

This mode is signaled at the CU level with a FRUC flag and an additional FRUC mode flag to indicate which matching cost function (bilateral or template) is to be used to derive motion information for the CU.

At an encoder side, the decision on whether to use FRUC merge mode for a CU is based on RD (rate distortion) cost selection. The two matching modes (bilateral and template) are both checked for a CU. The one leading to the minimal RD cost is further compared to other coding modes. If the FRUC mode is the most efficient in the RD sense, the FRUC flag is set to true for the CU and the related matching mode is used.

The motion derivation process in FRUC merge mode has two steps. A CU-level motion search is first performed, then followed by a sub-CU level motion refinement. At a CU level, an initial motion vector is derived from a list of MV (motion vector) candidates for the whole CU based on bilateral or template matching. The candidate leading to a minimum matching cost is selected as the starting point for further CU level refinement. Then a local search based on bilateral or template matching around the starting point is performed and the MV resulting in the minimum matching cost is taken as the MV for the whole CU. Subsequently, the motion information is further refined at sub-CU level with the derived CU motion vectors as the starting point.

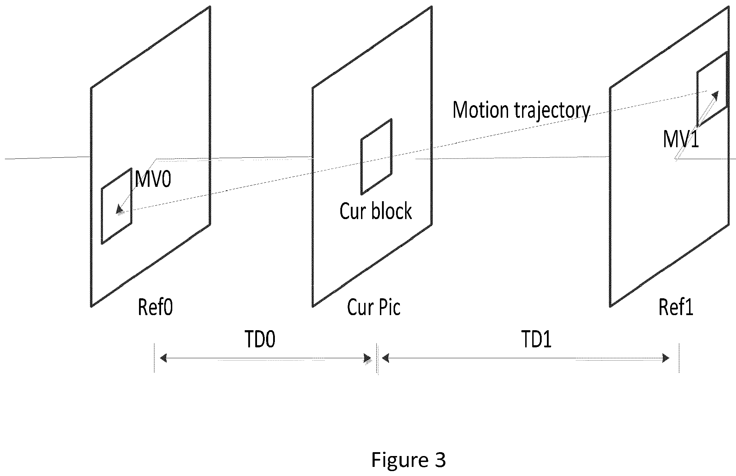

As shown in the Figure 3, the bilateral matching cost function is used to derive motion information of the current CU by finding the best match between two blocks along the motion trajectory of the current CU in two different reference pictures. Under the assumption of continuous motion trajectory, the motion vectors MV0 and MV1 pointing to the two reference blocks shall be proportional to the temporal distances between the current picture and the two reference pictures (TD0 and TD1).

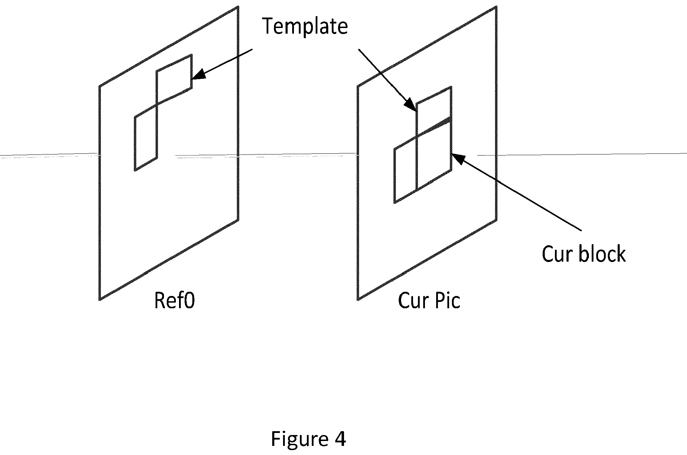

As shown in Figure 4, a template matching cost function is used to derive motion information of the current CU by finding the best match between a template (top and/or left neighboring blocks of the current CU) in the current picture and a block (same size to the template) in a reference picture.

Note that this FRUC mode using the template matching cost function can also be applied to AMVP (Advanced Motion Vector Prediction) mode in an embodiment. In this case, AMVP has two candidates. A new candidate is derived using the FRUC tool with the template matching. If this FRUC candidate is different from the first existing AMVP candidates, it is inserted at the very beginning of the AMVP candidate list and then the list size is set to two (meaning remove the second existing AMVP candidate). When applied to AMVP mode, only a CU level search is applied.

Illumination Compensation (IC)

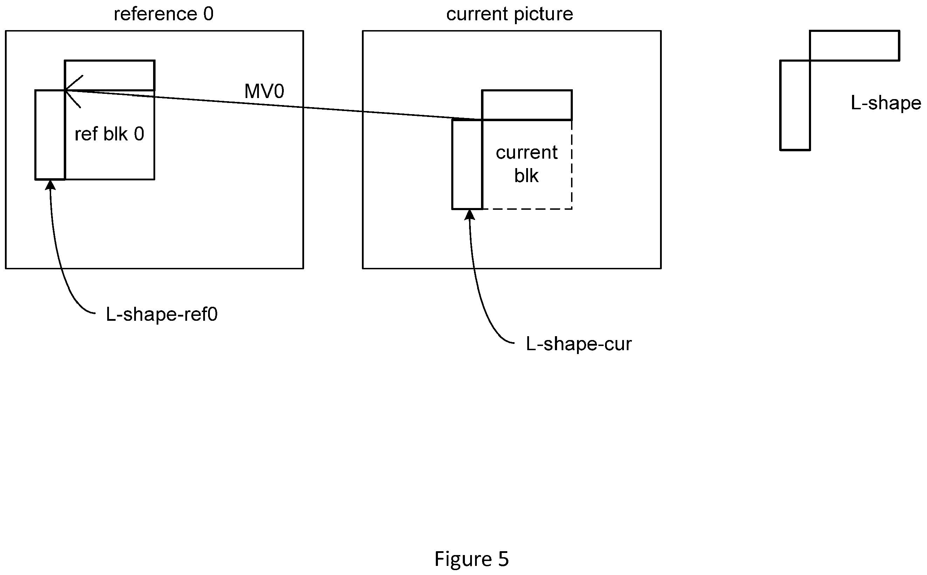

In Inter mode, IC allows correction of block prediction samples obtained via Motion Compensation (MC) by considering the spatial or temporal local illumination variation. The IC parameters are estimated by comparing the set S of reconstructed neighboring samples (L-shape-cur) with the neighboring samples (L-shape-ref-*i*) of the reference-*i* block (i=0 or 1) as depicted in Figure 5.

The IC parameters minimize the difference (least squares method) between the samples in the *L-shape-cur* and the samples of the *L-shape-ref-i* corrected with IC parameters. Typically, the IC model is linear: IC(x) = a*x+b, where x is the value of the sample to compensate.

The parameters a and b are derived by resolving a least square minimization on the L-shapes at the encoder (and at the decoder):

$$(a_i, b_i) = \operatorname*{argmin}_{(a,b)} \left( \sum_{\substack{x \in L-shape-cur, \\ y \in L-shape-ref-i}} (x - a.y - b)^2 \right) \qquad (2)$$

Finally, $a_i$ is transformed into integer weight ($a_i$) and shift ($sh_i$) and the MC block is corrected by IC :

$$\mathrm{Pred}_i = (a_i * x_i >> sh_i) + b_i \qquad (3)$$

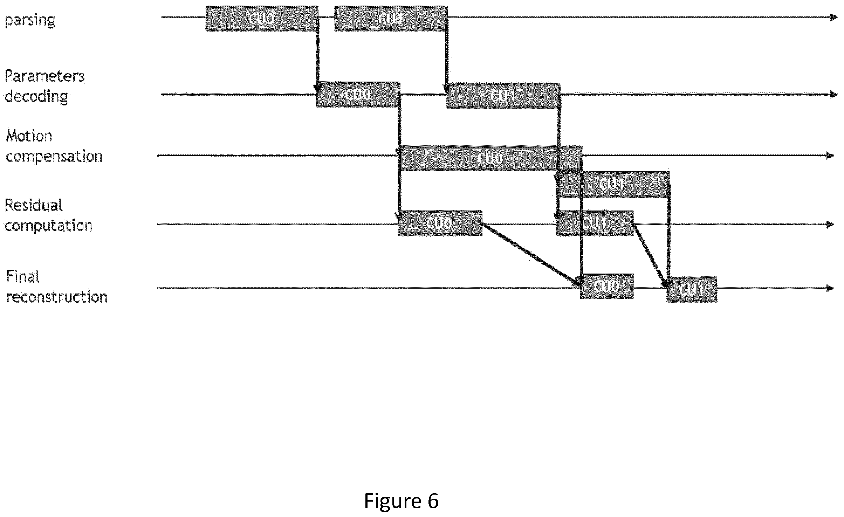

One problem solved by at least one of the described embodiments is how to relax the data dependency created by tools such as FRUC. Figure 6 shows an example of a processing pipeline for decoding an inter frame:

- First the bitstream is parsed and all symbols for a given unit are decoded (here we set the unit as a CU)
- Then the symbols are processed to compute the values used to reconstruct the CU. Examples of such values are motion vector values, residual coefficients etc.
- When the values are ready, the processing is performed. Figure 6 shows an example of the motion compensation and the residual reconstruction pipelines. Note that these modules can run in parallel and can have a running time very different from other modules like parsing or decoding, and also have varying time depending on the CU size.
- When all modules for a particular CU run, the final results are computed. Here, as an example, the final reconstruction consists in adding the motion compensated block and the residual block.

One issue arising with the tools such as FRUC when considering this kind of pipeline is that it introduces a dependency between the parameter decoding module and the compensation module because the final motion vector of the CU0 depends on the result of the motion compensation and CU1 should wait for this value before starting to decode the parameters.

Another issue is that some data that is used to perform the motion compensation (for example for FRUC mode or IC parameters computation) might not be available depending on the availability of sample data from each neighboring CU.

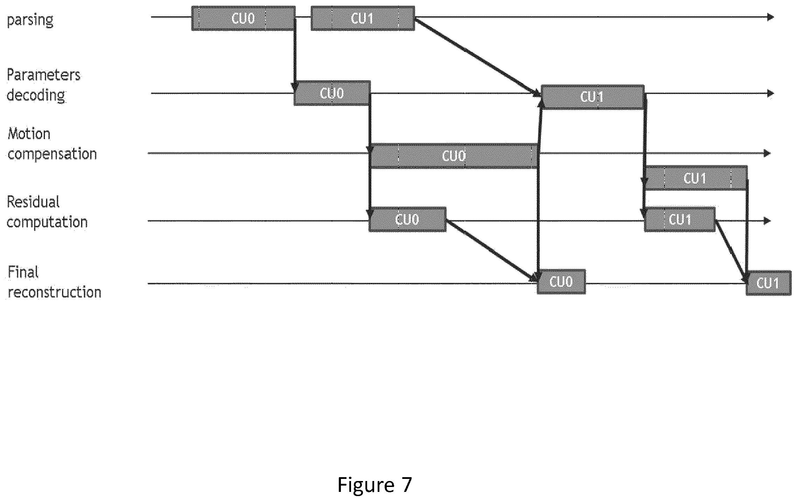

Figure 7 shows an example of a pipeline with data dependency arising in the motion compensation module.

At least one of the embodiments described here uses methods to avoid this dependency and allows a highly parallel pipeline at a decoder.

FRUC and IC are new modes in the JEM and so pipeline stalling is a relatively new problem.

The basic idea of at least one of the proposed embodiments is to break the dependency between the decoding and motion compensation module.

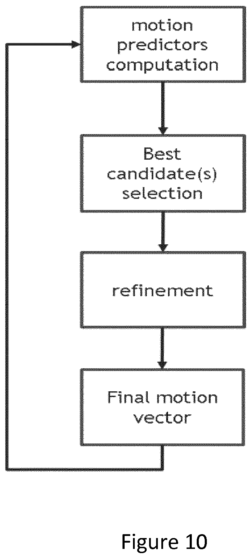

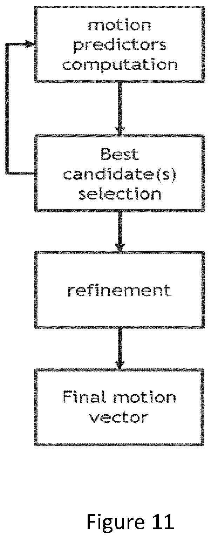

At least one of the proposed embodiments involves normative modifications of the codec: encoding and decoding processes are completely symmetric. The impacted codec modules of one or more embodiments are the motion compensation 170 and motion estimation 175 of Figure 10 and motion estimation 275 of Figure 11.

Non-dependent motion vector predictor

In a default FRUC template process, the motion vector of a particular block is refined using samples from top and left templates of neighboring blocks. After refinement, the final value of the motion vector is known and can be used to decode a motion vector of later blocks in the frame (see Figure 10). However, as the motion compensation and refinement can take a long time (especially waiting for data of other blocks to be ready), the decoding of the current parameters is stalling, or the motion compensation pipeline is waiting for the slowest block to continue.

Instead of using the final motion vector (after the FRUC process is finished) as a predictor for neighboring blocks, the predictor itself of the neighboring block is used as a predictor for the current block (see Figure 11). In this case, the motion compensation process can start immediately without waiting for the motion compensation process of the previous blocks to finish.

Non-dependent motion compensation

The motion compensation process still has some dependencies with the neighboring blocks values (typically the samples used in the templates at top and left are used to start the motion refinement process). In order to break this dependency, the FRUC mode can be constrained to a CU inside the CTU (or, in an alternate embodiment, a region of a given size).

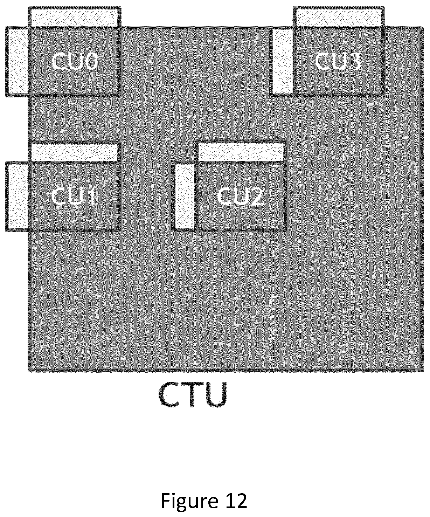

In Figure 12, we show an example of such restriction. For example, CU0, CU1 and CU3 will not be able to use the FRUC mode if both top and left templates are to be used, as it uses samples from another CTU. However, CU2 can use the FRUC template mode as the data dependency is confined inside the CTU. In JEM FRUC, availabilities of the left and top neighboring templates are tested independently, and, if at least one is available, then FRUC is performed. In this case CU0 is not possible, but CU3 is possible with left template only and CU1 is possible with top template only.

In another embodiment, the restriction only applies to a CTU on the left side, then CU3 is allowed to have a FRUC template mode.

This allows the parallelization of several CTUs in the motion compensation module.

Note this method applies for both FRUC and IC computation.

In another embodiment, the above restriction applies only on the update of the motion vector predictor: when the neighboring CU uses a predictor outside the CTU, only the motion vector predictor of this neighboring CU can be used, as opposed to the final motion vector value, but when the CU uses a motion vector predictor from a CU inside the CTU, then the final motion vector is used as a predictor for the current CU.

This allows the parallelization of several CTUs in the decoding module, allowing more parallelization on further modules.

An associated syntax, such as one or more flags, selections from lists, other indicators, for example, on the limitation of FRUC or IC can be signaled at, for example, one or more of the slice, PPS (Picture Parameter Set), or SPS (Sequence Parameter Set) levels. Other levels, high-level syntax or otherwise, are used in other embodiments. Associated syntax that is used for this signaling includes, for example, one or more flags, selections from lists, other indicators.

Independent motion vector decoding

In order to make the motion vector decoding to be not stalling, or not waiting, for the final results of the motion compensation, another method is to make the derivation process of the motion vector independent of the motion vector value itself. In this case, the motion vector derivation uses a modified process.

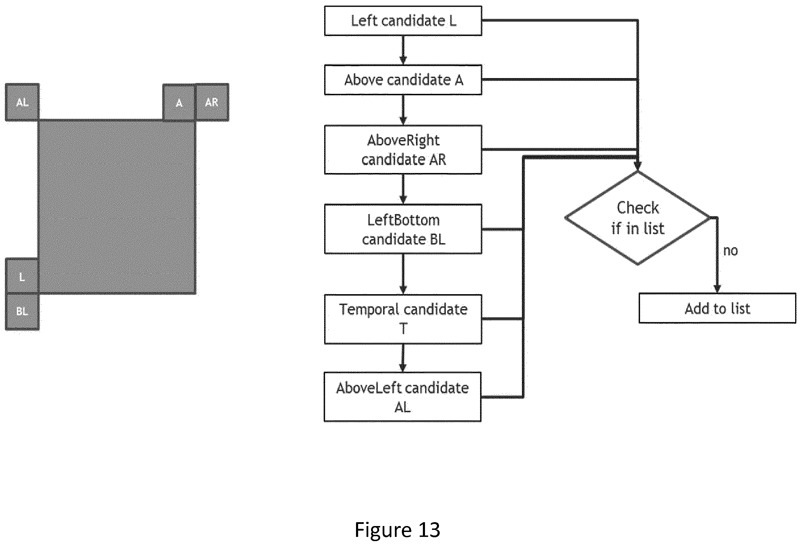

Figure 13 shows an example of motion vector predictor derivation.

In the default process, each new candidate vector is compared to a vector already in the list before adding it to the list. Comparison here can refer to motion vector equality, equal reference pictures and optionally IC usage equality.

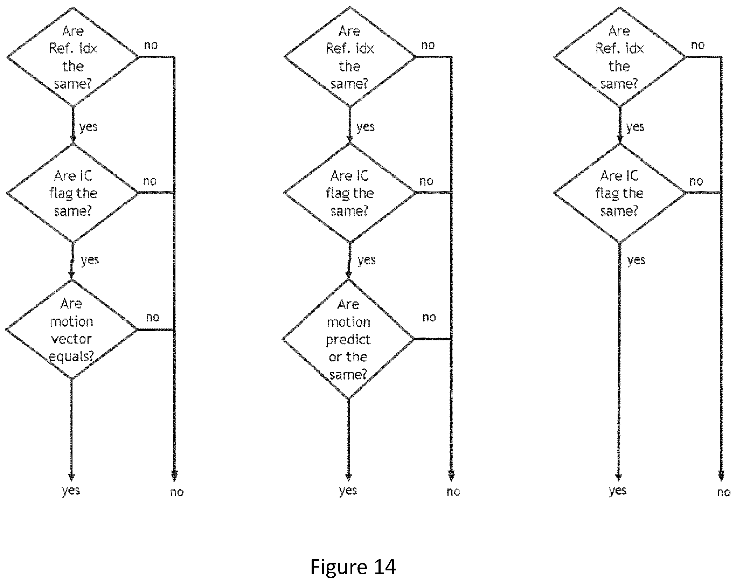

The new method comprises replacing the vector equality check in the module "Check if in list" by an alternate check: check on the predictor (instead of the final motion vector value), or bypass the check (see Figure 14).

Various embodiments include one or more of the following:

- Using a predictor of motion vector instead of the final motion vector value as a predictor for neighboring CUs. Several such embodiments address the dependency issue for FRUC between the decoding and the motion compensation module.
- Limit the reconstruction samples used for FRUC and IC inside a region.
- Allow the decoding of the parameters to be independent of the final value of the motion vector.

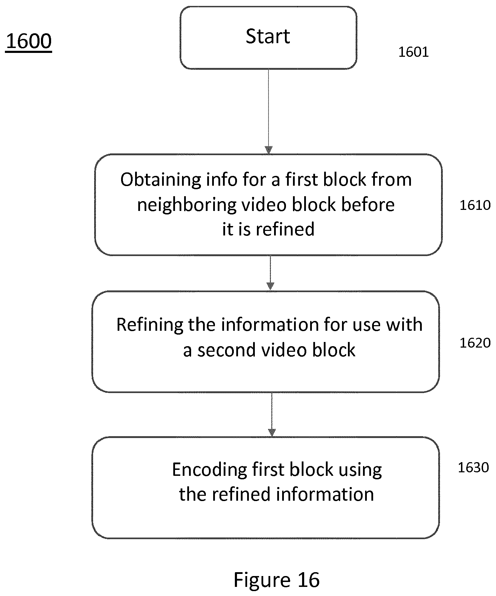

Figure 16 shows one embodiment of a method 1600 for reducing data dependency in an encoder. The method commences at Start block 1601 and control proceeds to block 1610 for obtaining information for a current video block from a neighboring video block before the information is refined for use in the neighboring video block. Control proceeds from block 1610 to block 1620 for refining the information for use with the current video block. Control proceeds from block 1620 to block 1630 for encoding the current video block the refined information.

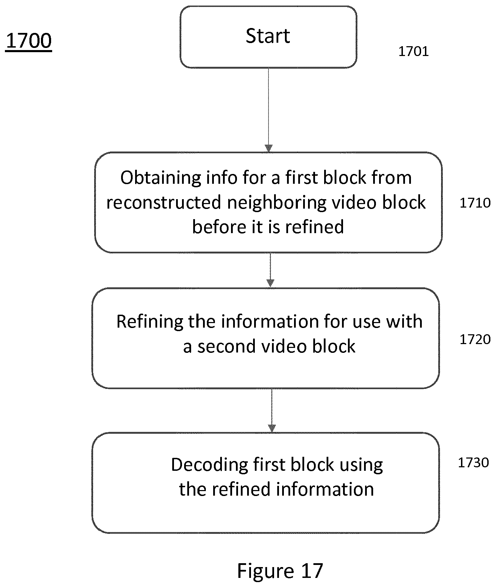

Figure 17 shows one embodiment of a method 1700 for reducing data dependency in an decoder. The method commences at Start block 1701 and control proceeds to block 1710 for obtaining information for a current video block from a reconstructed neighboring video block before the information is refined for use in the neighboring video block. Control proceeds from block 1710 to block 1720 for refining the information for use with the current video block. Control proceeds from block 1720 to block 1730 for decoding the current video block the refined information.

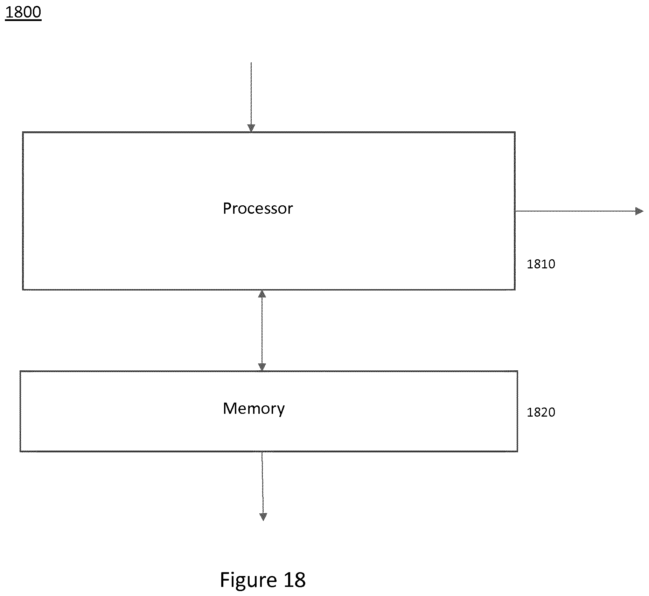

Figure 18 shows one embodiment of an apparatus 1800 for encoding or decoding a video block with reduced data dependency. The apparatus comprises Processor 2010 having one or more input and output ports and is interconnected through one or more communication ports to Memory 2020. Apparatus 2000 is capable of performing either of the methods of Figure 16 or Figure 17 or any variant.

This document describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

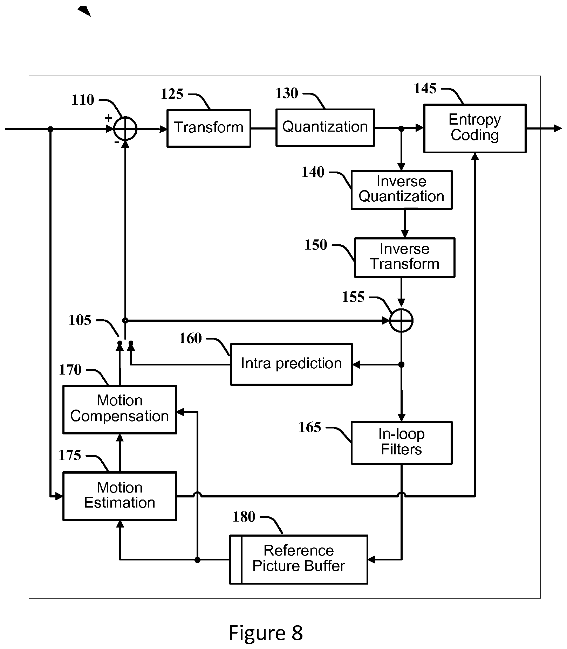

The aspects described and contemplated in this document can be implemented in many different forms. FIGs. 8, 9 and 15 below provide some embodiments, but other embodiments are contemplated and the discussion of FIGs. 8, 9 and 15 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described above, and each of the methods comprises one or more steps or actions for achieving the described method. Unless a specific order of steps or actions is required for proper operation of the method, the order and/or use of specific steps and/or actions may be modified or combined.

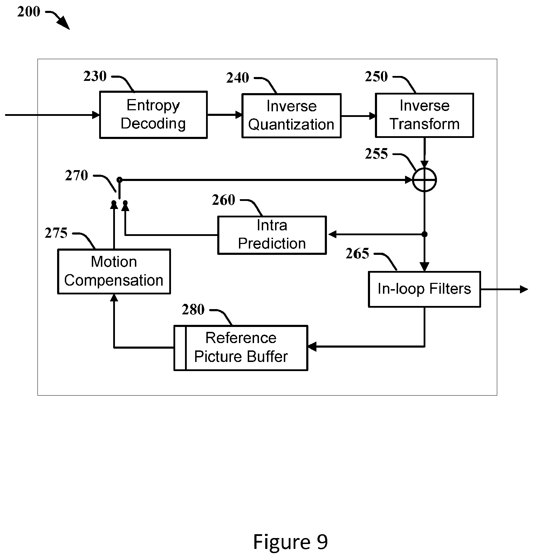

Various methods and other aspects described in this document can be used to modify modules, such as, for example, the motion compensation 170 and motion estimation 175 of Figure 8 and motion estimation 275 of Figure 9. Moreover, the present aspects are not limited to JVET or HEVC, and can be applied, for example, to other standards and recommendations, whether pre-existing or future-developed, and extensions of any such standards and recommendations (including JVET and HEVC). Unless indicated otherwise, or technically precluded, the aspects described in this document can be used individually or in combination.

Various numeric values may be shown in the present document. The specific values are for exemplary purposes and the aspects described are not limited to these specific values.

Figure 8 illustrates an exemplary encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the exemplary encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 9 illustrates a block diagram of an exemplary video decoder 200. In the exemplary decoder 200, a bitstream is decoded by the decoder elements as described below. Video decoder 200 generally performs a decoding pass reciprocal to the encoding pass as described in FIG. 1. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

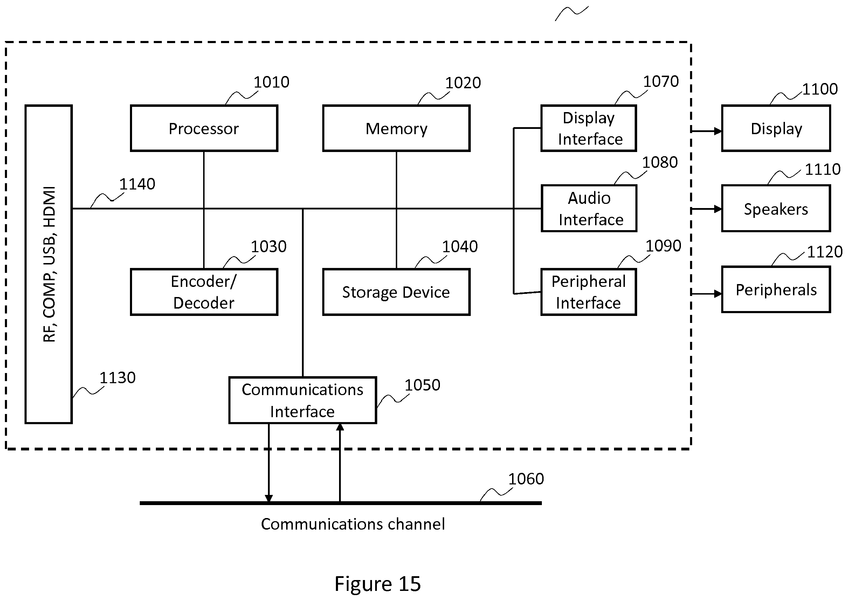

FIG. 15 illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit, multiple ICs, and/or discrete components. For example, in at least one embodiment, the processing and encoder/decoder elements of system 1000 are distributed across multiple ICs and/or discrete components. In various embodiments, the system 1000 is communicatively coupled to other systems, or to other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, EEPROM, ROM, PROM, RAM, DRAM, SRAM, flash, magnetic disk drive, and/or optical disk drive. The storage device 1040 can include an internal storage device, an attached storage device, and/or a network accessible storage device, as non-limiting examples.

System 1000 includes an encoder/decoder module 1030 configured, for example, to process data to provide an encoded video or decoded video, and the encoder/decoder module 1030 can include its own processor and memory.

The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 1000 can be provided through various input devices as indicated in block 1130. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010. Similarly, aspects of USB or HDMI interface processing can be implemented within separate interface ICs or within processor 1010. The demodulated, error corrected, and demultiplexed stream is provided to various processing elements, including, for example, processor 1010, and encoder/decoder 1030 operating in combination with the memory and storage elements to process the datastream for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the I2C bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed to the system 1000, in various embodiments, using a wireless network such as IEEE 802.11. The wireless signal of these embodiments is received over the communications channel 1060 and the communications interface 1050 which are adapted for wireless communications, such as Wi-Fi communications. The communications channel 1060 of these embodiments is typically connected to an access point or router that provides access to outside networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130.

The system 1000 can provide an output signal to various output devices, including a display 1100, speakers 1110, and other peripheral devices 1120. The other peripheral devices 1120 include, in various examples of embodiments, one or more of a stand-alone DVR, a disk player, a stereo system, a lighting system, and other devices that provide a function based on the output of the system 1000. In various embodiments, control signals are communicated between the system 1000 and the display 1100, speakers 1110, or other peripheral devices 1120 using signaling such as AV.Link, CEC, or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device, for example, a television. In various embodiments, the display interface 1070 includes a display driver, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The exemplary embodiments can be carried out by computer software implemented by the processor 1010 or by hardware, or by a combination of hardware and software. As a non-limiting example, the exemplary embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this document are not necessarily all referring to the same embodiment.

Additionally, this document may refer to "determining" various pieces of information. Determining the information can include one or more of, for example, estimating the information, calculating the information, predicting the information, or retrieving the information from memory.

Further, this document may refer to "accessing" various pieces of information. Accessing the information can include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this document may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding description has described a number of embodiments. These embodiments include the following optional features alone or in any combination, across various different claim categories and types:

- Relaxing, reducing, or otherwise modifying data dependency created by coding and/or decoding tools
- the tools include FRUC
- a predictor is used rather than a final value
- the data dependency is a dependency between a block being decoded and a neighboring block
- Using a predictor of a motion vector (or other coding/decoding parameter, such as quantization parameter, for example) of a block instead of the final motion vector (or other coding/decoding parameter) value of the block as a predictor for another block.
- the block is a CU
- the other block is a neighboring block
- relaxing, reducing, or otherwise modifying the dependency issue for FRUC between the decoding and the motion compensation module.
- Limiting the reconstruction samples used for FRUC and IC inside a region of an image.
- the region is all or part of a CTU
- Allowing the decoding of the motion vector to be independent of the final value of the motion vector.
- Relaxing, reducing, or otherwise modifying a data dependency between a block being decoded and a neighboring block
- FRUC mode is restrained to using CUs inside of a CTU
- FRUC mode is restrained to confine data dependency within a CTU or other block
- FRUC mode is restrained to confine data dependency within a CTU and one additional CTU
- A bitstream or signal that includes one or more of the described syntax elements, or variations thereof.
- Inserting in the signaling syntax elements that enable the decoder to process a bitstream in an inverse manner as to that performed by an encoder.
- Creating and/or transmitting and/or receiving and/or decoding a bitstream or signal that includes one or more of the described syntax elements, or variations thereof.
- A TV, set-top box, cell phone, tablet, or other electronic device that performs [DB(1]any of the embodiments described.
- A TV, set-top box, cell phone, tablet, or other electronic device that performs any of the embodiments described, and that displays (e.g. using a monitor, screen, or other type of display) a resulting image.
- A TV, set-top box, cell phone, tablet, or other electronic device that tunes (e.g. using a tuner) a channel to receive a signal including an encoded image, and performs any of the embodiments described.
- A TV, set-top box, cell phone, tablet, or other electronic device that receives (e.g. using an antenna) a signal over the air that includes an encoded image, and performs any of the embodiments described.
- Various other generalized, as well as particularized, features are also supported and contemplated throughout this disclosure.

**Claims**

1. A method, comprising:

   obtaining information for a current video block from a neighboring video block before said information is refined for use in said neighboring video block;
   refining said information for use with said current video block; and,
   encoding the current video block using said refined information.

2. An apparatus for encoding a video block, comprising:

   a memory, and
   a processor, configured to:

obtain information for a current video block from a neighboring video block before said information is refined for use in said neighboring video block;

refine said information for use with said current video block; and,

encode the current video block using said refined information.

3. A method, comprising:

obtaining information for a current video block from a reconstructed neighboring video block before said information is refined for use in said neighboring video block;

refining said information for use with said current video block; and,

decoding the current video block using said refined information.

4. An apparatus for decoding a video block, comprising:

a memory, and

a processor, configured to:

obtain information for a current video block from a reconstructed neighboring video block before said information is refined for use in said neighboring video block;

refine said information for use with said current video block; and,

decode the current video block using said refined information.

5. The method of Claim 1 or 3 or the apparatus of Claim 2 or 4, wherein

said information comprises a motion vector predictor;

said refining of the motion vector predictor for said current video block comprises frame rate up conversion to generate a motion vector; and

said encoding comprises using the motion vector, for said current block.

6. The method of Claim 5, wherein

said refining of the motion vector predictor is based on template matching.

7. The method of Claim 6, wherein

said template matching is confined to a coding tree unit containing the current video block.

8. The method of Claim 5, using a motion vector predictor from a neighboring coding unit when that coding unit is outside a current coding tree unit, and using a final motion vector when a coding unit uses a motion vector predictor from a coding unit within a current coding tree unit.

9. The method of Claim 1 or 3 or the apparatus of Claim 2 or 4, wherein a motion vector predictor is checked to see whether it is in a list of candidates before adding it to said list.

10. The method of Claim 1 or 3 or the apparatus of Claim 2 or 4, wherein syntax is used to signal said refining.

11. The method of Claim 1 or 3 or the apparatus of Claim 2 or 4, wherein said refining comprises illumination compensation.

12. A device comprising:

an apparatus according to any of claims 4 through 11; and

at least one of (i) an antenna configured to receive a signal over the air, the signal including the video block, (ii) a band limiter configured to limit the received signal to a band of frequencies that includes the video block, and (iii) a display configured to display an output.

13. A non-transitory computer readable medium containing data content generated according to the method of any one of claims 1 and 5 to 12, or by the apparatus of any one of claims 2 and 5 to 12, for playback using a processor.

14. A signal comprising video data generated according to the method of any one of claims 1 and 5 to 12, or by the apparatus of any one of claims 2 and 5 to 12, for playback using a processor.

**15.** A computer program product comprising instructions which, when the program is executed by a computer, cause the computer to carry out the method of any one of claims 3 and 5 to 12.

Figure 1

Figure 2

Figure 3

Figure 4

reference 0

current picture

MV0

ref blk 0

current blk

L-shape-ref0

L-shape-cur

L-shape

EP 3 591 974 A1

Figure 5

Figure 6

parsing

Parameters decoding

Motion compensation

Residual computation

Final reconstruction

parsing

Parameters
decoding

Motion
compensation

Residual
computation

Final
reconstruction

Figure 7

Figure 8

Figure 9

EP 3 591 974 A1

Figure 10

```
┌─────────────────┐
│     motion      │
│    predictors   │
│   computation   │
└─────────────────┘
         │
         ▼
┌─────────────────┐
│      Best       │
│  candidate(s)   │
│    selection    │
└─────────────────┘
         │
         ▼
┌─────────────────┐
│                 │
│   refinement    │
│                 │
└─────────────────┘
         │
         ▼
┌─────────────────┐
│  Final motion   │
│     vector      │
└─────────────────┘
```

Figure 11

Figure 12

Figure 13

EP 3 591 974 A1

Are Ref. idx the same? — no

yes

Are IC flag the same? — no

yes

Are motion vector equals? — no

yes / no

Are Ref. idx the same? — no

yes

Are IC flag the same? — no

yes

Are motion predict or the same? — no

yes / no

Are Ref. idx the same? — no

yes

Are IC flag the same? — no

yes / no

Figure 14

Figure 15

EP 3 591 974 A1

1600

Start

1601

Obtaining info for a first block from
neighboring video block before
it is refined

1610

Refining the information for use with
a second video block

1620

Encoding first block using
the refined information

1630

Figure 16

EP 3 591 974 A1

EP 3 591 974 A1

1700

Start
1701

Obtaining info for a first block from reconstructed neighboring video block before it is refined
1710

Refining the information for use with a second video block
1720

Decoding first block using the refined information
1730

Figure 17

1810

1820

Processor

Memory

Figure 18

1800

Europäisches
Patentamt

European
Patent Office

Office européen
des brevets

# EUROPEAN SEARCH REPORT

Application Number

EP 18 30 5852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2018/041769 A1 (CHUANG TZU DER [TW] ET AL) 8 February 2018 (2018-02-08)<br>* paragraphs [0040] - [0041], [0044] - [0046], [0049] - [0056], [0061] - [0068] *<br>* figures 1, 3, 5, 7, 8 *<br>----- | 1-8,10, 12-15<br>9,11 | INV.<br>H04N19/577<br>H04N19/176<br>H04N19/513 |
| Y<br><br><br><br><br><br><br>A | CHEN J ET AL: "Algorithm description of Joint Exploration Test Model 6 (JEM6)", 6. JVET MEETING; 31-3-2017 - 7-4-2017; HOBART; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-F1001, 31 May 2017 (2017-05-31), XP030150793,<br>* section 2.3.5, 2.3.7 *<br>* figures 15, 20, 21 *<br>----- | 11<br><br><br><br><br><br><br>1-10, 12-15 | |
| Y | Y-W CHEN ET AL: "Description of SDR, HDR and 360° video coding technology proposal by Qualcomm and Technicolor "" low and high complexity versions", 10. JVET MEETING; 10-4-2018 - 20-4-2018; SAN DIEGO; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-J0021-v5, 14 April 2018 (2018-04-14), XP030151184,<br>* section 2.8.2.2 *<br>----- | 9 | TECHNICAL FIELDS SEARCHED (IPC)<br><br>H04N |

The present search report has been drawn up for all claims

| Place of search | Date of completion of the search | Examiner |
|---|---|---|
| The Hague | 19 December 2018 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5852

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2018

| Patent document cited in search report | Publication date | Patent family member(s) | Publication date |
|---|---|---|---|
| US 2018041769 A1 | 08-02-2018 | TW 201813396 A<br>US 2018041769 A1<br>WO 2018028559 A1 | 01-04-2018<br>08-02-2018<br>15-02-2018 |

EPO FORM P0459

For more details about this annex : see Official Journal of the European Patent Office, No. 12/82